(19) Europäisches Patentamt

European Patent Office

Office européen des brevets

(11) **EP 1 025 704 B1**

(12) **EUROPÄISCHE PATENTSCHRIFT**

(45) Veröffentlichungstag und Bekanntmachung des Hinweises auf die Patenterteilung:
**07.11.2001 Patentblatt 2001/45**

(21) Anmeldenummer: **98948739.2**

(22) Anmeldetag: **07.08.1998**

(51) Int Cl.⁷: $H04N\ 7/26$

(86) Internationale Anmeldenummer:
**PCT/DE98/02267**

(87) Internationale Veröffentlichungsnummer:
**WO 99/21365 (29.04.1999 Gazette 1999/17)**

(54) **VERFAHREN ZUR BEWEGUNGSKOMPENSIERENDEN PRÄDIKTION VON BEWEGTBILDFOLGEN**

MOTION COMPENSATING PREDICTION OF MOVING IMAGE SEQUENCES

PROCEDE DE PREDICTION DE SUITES D'IMAGES ANIMEES, AVEC COMPENSATION DE MOUVEMENT

(84) Benannte Vertragsstaaten:
**DE FR GB IT SE**

(30) Priorität: **21.10.1997 DE 19746214**

(43) Veröffentlichungstag der Anmeldung:
**09.08.2000 Patentblatt 2000/32**

(73) Patentinhaber: **ROBERT BOSCH GMBH**
**70442 Stuttgart (DE)**

(72) Erfinder:
- **BENZLER, Ulrich**
  **D-30855 Langenhagen (DE)**
- **BEREKOVIC, Mladen**
  **D-30966 Hemmingen (DE)**
- **WOLLBORN, Michael**
  **D-30455 Hannover (DE)**

(56) Entgegenhaltungen:
US-A- 4 864 393      US-A- 5 329 318
US-A- 5 396 592

- **PANG K K ET AL: "OPTIMUM LOOP FILTER IN HYBRID CODERS" IEEE TRANSACTIONS ON CIRCUITS AND SYSTEMS FOR VIDEO TECHNOLOGY, Bd. 4, Nr. 2, 1. April 1994, Seiten 158-167, XP000489688**
- **HERLEY C ET AL: "ORTHOGONAL TIME-VARYING FILTER BANKS AND WAVELET PACKETS" IEEE TRANSACTIONS ON SIGNAL PROCESSING, Bd. 42, Nr. 10, 1. Oktober 1994, Seiten 2650-2663, XP000470689**
- **QUEIROZ DE R L: "SUBBAND PROCESSING OF FINITE LENGTH SIGNALS WITHOUT BORDER DISTORTIONS" DIGITAL SIGNAL PROCESSING 1, SAN FRANCISCO, MAR. 23 - 26, 1992, Bd. 4, Nr. CONF. 17, 23. März 1992, Seiten IV-613-IV-616, XP000467271 INSTITUTE OF ELECTRICAL AND ELECTRONICS ENGINEERS**
- **BARNARD H J ET AL: "EFFICIENT SIGNAL EXTENSION FOR SUBBAND/WAVELET DECOMPOSITION OF ARBITRARY LENGTH SIGNALS" PROCEEDINGS OF THE SPIE, Bd. 2094, Nr. PART 02, 8. November 1993, Seiten 966-975, XP002034347**

**Beschreibung**

Stand der Technik

Die Erfindung geht aus von einem Verfahren zur bewegungskompensierenden Prädiktion von Bewegtbildfolgen unter Verwendung von Bewegungsvektoren , die für jeden Bildblock eines aktuellen Bildes die Position des zur Prädiktion benutzten Bildblockes gegenüber einem bereits übertragenen Referenzbild angeben.

Aus der EP 0 558 922 B2 ist ein Verfahren zur Verbesserung der Bewegungsschätzung in Bildsequenzen in Halbpelgenauikeit nach dem Full-Search-Verfahren bekannt. Dort wird in einem ersten Verfahrensschritt der Suchbereich und in einem zweiten Verfahrensschritt der Match-Block gefiltert unter Zuhilfenahme eines zusätzlichen digitalen Filters, daß eine Rasterverschiebung des Bildpunktrasters um ⊡ pel ermöglicht. Mit dieser Maßnahme ist eine Verfälschung des Bewegungsvektorfeldes auszuschließen.

Beim "MPEG-4 Video Verification Model Version 8.0", Stockholm, Juli 1997, MPEG 97/N1796 in ISO/IEC JTC1/SC 29/WG11 ist ein Encoder und Decoder zur objektbasierten Codierung von Bewegtbildfolgen spezifiziert. In einer zugehörigen Working Draft Version 4.0 ist unter MPEG 97/N1797 ein Decoder spezifiziert. Dabei werden innerhalb einer Video Session (VS) nicht mehr rechteckige Bilder fester Größe codiert und zum Empfänger übertragen, sondern sogenannte VIDEO OBJECTS (VO), welche beliebige Form und Größe aufweisen dürfen. Diese Video Objects können dann weiterhin noch in verschiedene Video Object Layer (VOL) unterteilt sein, um z.B. verschiedene Auflösungsstufen eines Videoobjektes darzustellen. Die Abbildung eines bestimmten Layers in der Kamerabildebene zu einem bestimmten Zeitpunkt wird als VIDEO OBJECT PLANE (VOP) bezeichnet. Somit ist die Beziehung zwischen VO und VOP äquivalent zu der Beziehung zwischen Bildfolge und Bild im Falle der Übertragung rechteckiger Bilder fester Größe.

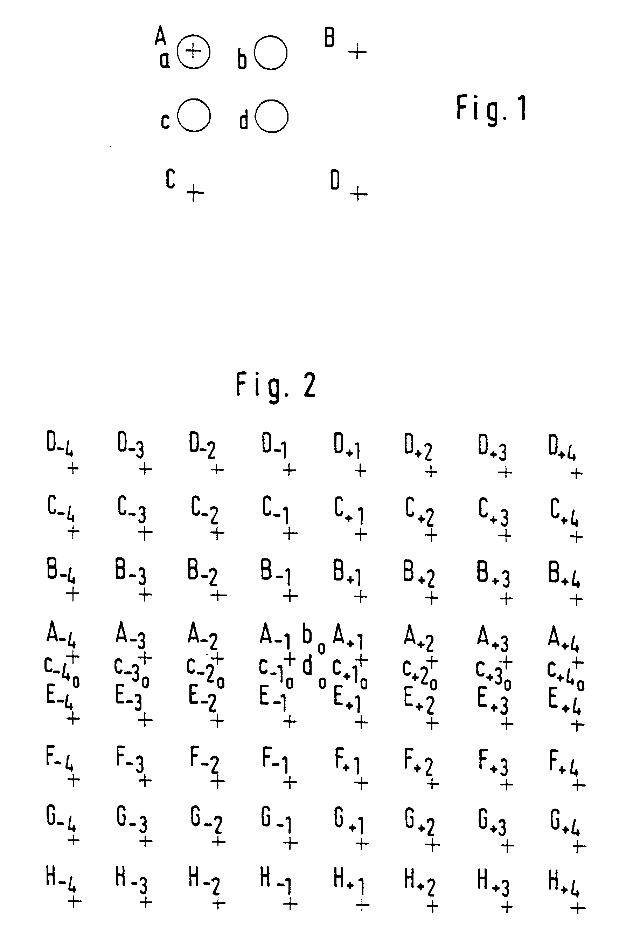

Die bewegungskompensierende Prädiktion im Verifikationsmodell wird mit Hilfe sogenannter blockweiser Bewegungsvektoren durchgeführt, die für jeden Block der Größe 8 x 8 bzw. 16 x 16 Bildpunkte des aktuellen Bildes die Position des zur Prädiktion benutzten Blockes in einem bereits übertragenen Referenzbild angeben. Die Amplitudenauflösung der Bewegungsvektoren ist dabei auf einen halben Bildpunkt beschränkt, wobei Bildpunkte zwischen dem Abtastraster (half pixel position) durch eine bilineare Interpolationsfilterung aus den Bildpunkten auf dem Abtastraster (integer pixel position) erzeugt werden (Figur 1).+ gibt hierbei die Ganzzahl-Pixel-Position und O die Halb-Pixel-Position an. Die interpolierten Werte a, b, c und d in Halb-Pixel-Position ergeben sich durch folgende Beziehungen:

$$a = A, \; b = (A + B)//2, \; c = (A + C)//2,$$

$$d = (A + B + C + D)//4,$$

wobei // eine gerundete Ganzzahl-Division kennzeichnet.

In der DE 197 30 305.6 wurde ein Verfahren zur Erzeugung eines verbesserten Bildsignals vorgeschlagen mit verbesserter Qualität des Prädiktionssignals und somit der Kodierungseffizienz. Dabei wird zur Erzeugung von Bildpunkten zwischen dem Bildpunkt-Abtastraster eine größere örtliche Nachbarschaft berücksichtigt, als bei der bilinearen Interpolation. Die aliasing-reduzierende Interpolationsfilterung führt zu einer erhöhten Auflösung des Bewegungsvektors und damit zu einem Prädiktionsgewinn und einer erhöhten Codierungseffizienz. Es können dort die FIR-Filterkoeffizienten den zu codierenden Signalen angepaßt und für jedes Video-Object getrennt übertragen werden, was eine weitere Effizienzerhöhung für die Codierung ermöglicht sowie die Flexibilität des Verfahrens erhöht. Im Gegensatz zur Lösung gemäß der EP 0 558 922 B1 müssen keine zusätzlichen Polyphasenfilterstrukturen für Zwischenpositionen mit ⊡ pel-Bildpunktauflösung in horizontaler und vertikaler Richtung entworfen werden.

Es ist dort auch möglich, daß bei gleichbleibender Datenrate die Bildfolgefrequenz eines MPEG-1-Coders von 25 Hz auf 50 Hz verdoppelt werden kann. Bei einem MPEG2-Coder kann die Datenrate bei gleichbleibender Bildqualität um bis zu 30% reduziert werden.

PANG K K ET AL: "OPTIMUM LOOP FILTER IN HYBRID CODERS", IEEE TRANSACTIONS ON CIRCUITS AND SYSTEMS FOR VIDEO TECHNOLOGY, Bd. 4, Nr. 2, 1. April 1994, Seiten 158-167 stellt den nächsten Stand der Technik dar und beschreibt, daß für die Ermittlung von Bewegungsvektoren eine Interpolationsfilterung mit Subpixelgenauigkeit verwendet wird, wobei zur Interpolation mehr Nachbarbildpunkte herangezogen werden als bei einer bilinearen Interpolation.

US-A-5 396 592 beschreibt eine bilineare Interpolation, wobei für die Prädiktion eines Bildblockes von MxM Bildpunkten auf einen (M+1)x(M+1) Bildpunkte umfasseden Block des Referenzbildes zugegriffen wird.

Vorteile der Erfindung

Der entscheidende Vorteil der erfindungsgemäßen Interpolationsfilterung nach den Merkmalen der Ansprüche 1 oder 2 gegenüber bisher bekannten Verfahren ist die deutlich verringerte Komplexität der Implementierung der Verfahren, insbesondere bezüglich der für die bewegungskompensierte Prädiktion benötigten Speicherbandbreite beim Zugriff auf die Referenzbilder. War bislang die hier benötigte Speicherbandbreite gegenüber der bilinearen Interpolation bei ½ Bildpunkt Amplitudenauflösung der Bewegungs-Vektoren etwa bis zu einem Faktor 3 höher, so ist sie bei dem erfindungsgemäßen Verfahren identisch mit dieser. Auf der anderen Seite bleiben die Vorteile des verbesserten Verfahrens, nämlich eine effizientere Codierung der Bewegtbildsequenz gemäß der DE 197 30 305.6 erhalten.

Der Unterschied zwischen den Möglichkeiten der Ansprüche 1 und 2 besteht im wesentlichen darin, daß bei der Möglichkeit nach Anspruch 2 die Hardware-Realisierung des Verfahrens einfacher ist als bei Möglichkeit nach Anspruch 1. Auf der anderen Seite gestattet die Möglichkeit nach Anspruch 1 die Verwendung speziell entwickelter asymmetrischer Filter.

Für die Interpolationsfilterung nach der Erfindung können N-stufige FIR-Filter verwendet werden.

Bei dem erfindungsgemäßen Verfahren wird die Anzahl der zur Prädiktion eines Bildblockes notwendigen Bildpunkte des Referenzbildes reduziert. Hierdurch wird die Komplexität des Verfahrens gemäß der DE 197 30 305.6 verbessert, speziell auf die Komplexität der ursprünglich verwendeten bilinearen Interpolationsfilterung bei ½ Bildpunkt Amplitudenauflösung der Bewegungsvektoren verringert, ohne die durch das verbesserte Verfahren erzielbaren Gewinne wesentlich zu beeinträchtigen.

Zeichnungen

Anhand von Zeichnungen werden nun Ausführungbeispiele der Erfindung näher erläutert. Es zeigen:

Figur 2 ein Interpolationsschema für Bildpunkte zwischen dem Bildpunkt-Abtastraster,
Figur 3 die Struktur eines FIR-Filters zur Interpolation,
Figur 4 eine weitere Interpolation mit noch höherer Auflösung,
Figur 5 eine Interpolationsfilterung unter Verwendung N-stufiger ortsadaptiver asymmetrischer FIR-Filter,
Figur 6 eine Interpolationsfilterung unter Verwendung einer Spiegelung der innerhalb eines Bildblocks liegenden Bildpunkte.

Beschreibung von Ausführungsbeispielen

Ausgangspunkt der Beschreibung bildet das Verfahren gemäß der DE 197 30 305.6, das, wie nachfolgend beschrieben, bezüglich der ⌊ Pel-Auflösung verbessert wird.

Bei diesem Verfahren werden für Bildblöcke Bewegungsvektoren gebildet, die für jeden Bildblock eines aktuellen Bildes die Position des zur Prädiktion benutzten Bildblockes gegenüber einem bereits übertragenen Referenzbild angeben.

Die Bestimmung der Bewegungsvektoren für die Prädiktion kann dabei beispielsweise wie in der DE 197 30 305.6 angegeben in drei aufeinanderfolgenden Schritten erfolgen.

In einem ersten Suchschritt wird ein Bewegungsvektor mit Pelgenauigkeit nach einem herkömmlichen Verfahren, z. B. nach der Full-Search-Block-Matching-Methode, für jeden Bildblock bestimmt. Hierbei wird das Minimum des Fehlerkriteriums für mögliche Bewegungspositionen ermittelt und jener Vektor, der die Bewegung des Bildblockes am besten beschreibt, ausgewählt (EP 0 368 151 B1).

In einem zweiten Suchschritt, der wiederum auf einer solchen Minimumsuche für das Fehlerkriterium basiert, wird ausgehend von dem im ersten Schritt ermittelten Bewegungsvektor mit Pelgenauigkeit durch eine aliasing-reduzierende Interpolationsfilterung mittels eines digitalen symmetrischen FIR (finite impulse response)-Filters ein verbesserter Bewegungsvektor auf Subpelgenauigkeit ermittelt. Die Auflösung wird hierbei höher gewählt als im ersten Suchschritt, vorzugsweise wird eine Auflösung von einem halben Bildpunkt bezogen auf das Bildpunktraster gewählt.

Figur 2 zeigt das Interpolationsmuster für die Bildpunkte b, c und d zwischen dem Bildpunktraster, die sich aus den Nachbarbildpunkten A, B, C, D, E, F, G, H auf dem Bildpunktraster ergeben. + gibt die Ganzzahl-Pixelposition an, o die Halbpixelposition. Es gilt:

$$b = (CO1x(A_{-1} + A_{+1}) + CO2x (A_{-2} + A_{+2}) + CO3x (A_{-3} + A_{+3}) + CO4x (A_{-4} + A_{+4}))/256$$

$$c_i = (CO1x(A_i + E_i) + CO2x(B_i + F_i) + CO3x (C_i + G_i) + GO4x(D_i + H_i))/256$$

$$d = (CO1x(c_{-1} + c_{+1}) + CO2x(c_{-2} + c_{+2}) + CO3x(c_{-3} + c_{+3}) + CO4x(c_{-4} + c_{+4}))/256$$

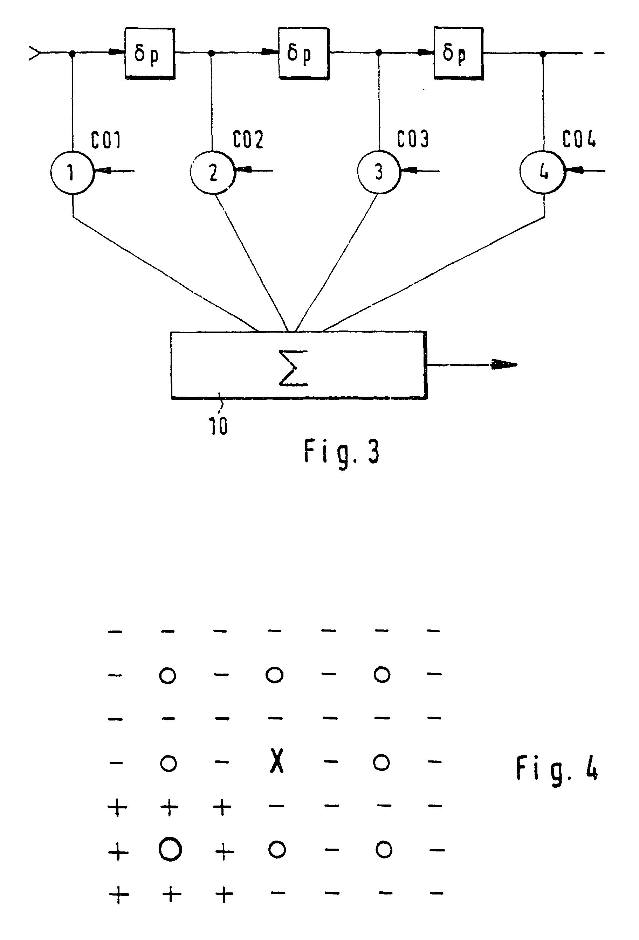

Die Struktur des verwendeten FIR-Interpolationsfilters ist aus Figur 3 ersichtlich. Es weist nach jeder Bildpunktposition $\delta p$ einen Abzweig zu einem Koeffizienten- bewerter 1, 2, 3 usw. auf und eine Summationseinrichtung 10 am Ausgang. Wie aus obigen Beziehungen ersichtlich ist, wird zur Erzeugung von Bildpunkten zwischen dem Abtastraster eine größere örtliche Nachbarschaft berücksichtigt, als bei der bilinearen Interpolation nach dem Stand der Technik. Die Interpolationsfilterkoeffizienten CO1, CO2, CO3, CO4 werden dabei so bestimmt, daß die Interpolationsfehlerleistung minimal wird. Die Koeffizienten können direkt mit dem bekannten Schätzverfahren des kleinsten, mittleren quadratischen Fehlers bestimmt werden. Aus der Minimierung der Interpolationsfehlerleistung erhält man ein lineares Gleichungssystem, dessen Koeffizienten aus dem Orthogonalitätsprinzip abgeleitet werden können. Ein derart optimierter Satz von FIR-Filterkoeffizienten ist durch die Koeffizienten CO1 = 161/256, CO2 = -43/256, CO3 = 23/256, CO4 = -8/256 gegeben.

Im dritten Suchschritt wird ausgehend von dem auf ½ Pel-genauigkeit bestimmten Bewegungsvektor durch eine weitere Interpolationsfilterung eine lokale Suche unter Zugrundelegung der acht Nachbarbildpunkte mit einer Auflösung, die noch weiter erhöht ist, vorzugsweise auf ⌐ Bildpunkt, durchgeführt. Es wird wie zuvor der Bewegungsvektor ausgewählt, der die geringste Prädiktionsfehlerleistung liefert.

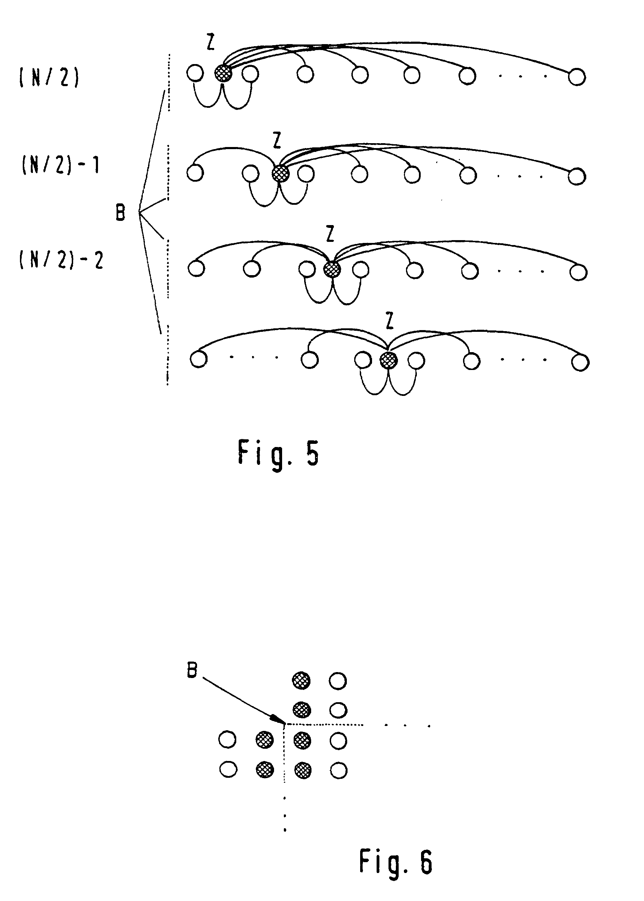

Das Interpolationsmuster hierzu zeigt Figur 4. Die ganzzahligen Bildpunkt-Positionen sind mit X gekennzeichnet, die Halb-Pixel-Bildpunktpositionen mit o und die Viertel-PixelBildpunktpositionen mit -. O markiert die beste Kompensation mit 1/2-Bildpunkt und + die Viertelbildpunkt- Suchposition.

Interpoliert wird bezüglich des Bildpunktrasters mit der Auflösung von einem halben Bildpunkt aus dem zweiten Suchschritt mit den FIR-Filterkoeffizienten CO1' = 1/2, CO2' = O, CO3' = O, CO4' = O.

Die gleiche zuvor vorgestellte Interpolationstechnik wird für die bewegungskompensierende Prädiktion verwendet.

Falls die Verarbeitung innerhalb eines Coders mit einem reduzierten Bildformat durchgeführt wird (SIF-Format innerhalb eines MPEG1-Coders oder Q-CIF in einem H.263-Coder), zur Anzeige aber das ursprüngliche Eingangsformat verwendet wird, z.B. CCIR 601[1] bei MPEG-1 oder CIF bei H.263, muß als Nachverarbeitung eine örtliche Interpolationsfilterung durchgeführt werden. Auch für diesen Zweck kann die beschriebene aliasing-kompensierende-Interpolationsfilterung verwendet werden.

Um die aliasing-kompensierende Interpolation mit 1/4 Pel Auflösung zu aktivieren, können in einen Bildübertragungs-Bitstrom Aktivierungsbits eingefügt werden.

Für die Prädiktion von Video-Objekten können die Filterkoeffizienten CO1 bis C04 und CO1' bis CO4' für jedes der Video-Objekte VO getrennt aufbereitet werden und in den Bildübertragungs-Bitstrom zu Beginn der Übertragung des jeweiligen Video-Objekts eingefügt werden.

Zur Codierung eines Bewegungsvektors kann der Wertebereich der zu codierenden Bewegungsvektor-Differenzen an die erhöhte Auflösung angepaßt werden.

Bei der erfindungsgemäßen veränderten Interpolationsfilterung wird die Verwendung einer N-stufigen aliasingreduzierenden FIR (finite impulse resporse) - Filterstruktur und die erhöhte Amplitudenauflösung der Bewegungsvektoren beibehalten. Die Anzahl der zur Prädiktion eines Bildblockes notwendigen Bildpunkte des Referenzbildes wird jedoch reduziert.

Bei einer ersten Ausführungsform wird eine ortsadaptive asymmetrische FIR-Filterstruktur eingesetzt.

Dabei wird die Symmetrie der Filterstruktur abhängig von der Ortsposition des zu interpolierenden Zwischenbildpunktwertes so gewählt, daß für die Prädiktion eines Blocks von MxM Bildpunkten zur Filterung maximal auf einen (M+1)x(M+1) Bildpunkte großen Block des Referenzbildes zugegriffen werden muß. Das Prinzip der Ortsadaptivität ist für den eindimensionalen Fall in Figur 5 dargestellt.

Wie aus Figur 5 ersichtlich ist, werden für die Interpolation aus Symmetriegründen bei einer Filterlänge von N insgesamt N/2 verschiedene ortsadaptive Filter benötigt. Die entsprechenden Filterkoeffizienten können entweder einmalig festgelegt oder aber vor dem Beginn der Bildübertragung einmalig zum Empfänger übertragen werden.

Zur Interpolationsfilterung von Zwischenbildpunkten Z im Bereich von Blockkanten B werden jeweils alle Bildpunkte ausgehend von einer aktuellen Zwischenbildpunktposition bis zur Blockkante berücksichtigt und die jenseits der Zwischenbildpunktposition gelegenen Bildpunkte nur insoweit berücksichtigt bis insgesamt eine vorgegebene Bildpunktanzahl für die Interpolation erreicht ist.

Beim in Figur 5 gezeigten Beispiel werden zur Interpolation für einen Zwischenbildpunkt Z für das Filter (N/2)-1 links vom Zwischenbildpunkt zwei Bildpunkte ausgewertet und rechts davon beispielsweise sechs. Beim Filter (N/2)-2 werden links drei Bildpunkte ausgewertet und rechts davon 5 usw.

Bei einer alternativen Ausführungsform werden die bei der Prädiktion eines Blockes von MxM Bildpunkten zur Interpolationsfilterung benötigten Bildpunkte, die außerhalb eines (M+1)x(M+1) großen Blockes des Referenzbildes liegen, durch Spiegelung der innerhalb des Referenzblockes liegenden Bildpunkte an der Blockkante entsprechend Figur 6 erzeugt.

Wie Figur 6 zeigt, werden an einer Ecke von Blockkanten B Bildpunkte sowohl nach oben als auch nach links gespiegelt. An anderen Ecken gilt dies entsprechend. Beim Ausführungsbeispiel nach Figur 6 kann eine symmetrische Filterstruktur gemäß Figur 2 zur Interpolationsfilterung eines Bewegungsvektors auf ⬚ Pel-Genauigkeit benutzt werden.

**Patentansprüche**

1. Verfahren zur bewegungskompensierenden Prädiktion von Bewegtbildfolgen unter Verwendung von Bewegungsvektoren, die für jeden Bildblock eines aktuellen Bildes die Position des zur Prädiktion benutzten Bildblockes gegenüber einem bereits übertragenen Referenzbild angeben, mit folgenden Schritten:

   - für die Ermittlung der Bewegungsvektoren wird eine aliasingreduzierende Interpolationsfilterung mit Subpelgenauigkeit verwendet, wobei zur Interpolation mehr Nachbarbildpunkte herangezogen werden als bei einer bilinearen Interpolation,
   - die Interpolationsfilterung wird abhängig von der Ortsposition eines zu interpolierenden Zwischenbildpunktwertes so durchgeführt, daß für die Prädiktion eines Bildblockes von MxM Bildpunkten zur Filterung maximal auf einen (M+1)x(M+1) Bildpunkte umfassenden Block des Referenzbildes zugegriffen werden muß.

2. Verfahren zur bewegungskompensierenden Prädiktion von Bewegtbildfolgen unter Verwendung von Bewegungsvektoren, die für jeden Bildblock eines aktuellen Bildes die Position des zur Prädiktion benutzten Bildblockes gegenüber einem bereits übertragenen Referenzbild angegeben, mit folgenden Schritten:

   - für die Ermittlung der Bewegungsvektoren wird eine aliasingreduzierende Interpolationsfilterung mit Subpelgenauigkeit verwendet, wobei zur Interpolation mehr Nachbarbildpunkte herangezogen werden als bei einer bilinearen Interpolation,
   - die bei der Prädiktion eines Bildblockes von MxM Bildpunkten zur Interpolationsfilterung benötigten Bildpunkte, die außerhalb eines (M+1)x(M+1) großen Bildblockes des Referenzbildes liegen, werden durch Spiegelung der innerhalb des Referenzblockes liegenden Bildpunkte an einer Blockkante erzeugt.

3. Verfahren nach Anspruch 1, **dadurch gekennzeichnet, daß** zur Interpolationsfilterung eine ortsadaptive asymmetrische FIR-Filterstruktur verwendet wird, die zur Interpolationsfilterung von Zwischenbildpunkten im Bereich von Blockkanten jeweils alle Bildpunkte ausgehend von einer aktuellen Zwischenbildpunktposition bis zur Blockkante berücksichtigt und die jenseits der Zwischenbildpunktpositionen gelegenen Bildpunkte nur insoweit berücksichtigt bis insgesamt eine vorgegebene Bildpunktzahl für die Interpolation erreicht ist.

4. Verfahren nach Anspruch 1 oder 3, **dadurch gekennzeichnet, daß** für die Interpolationsfilterung bei einer Filterlänge von N Filterelementen insgesamt N/2 verschiedene ortsadaptive Filter verwendet werden.

5. Verfahren nach einem der Ansprüche 1, 3 oder 4, **dadurch gekennzeichnet, daß** die Filterkoeffizienten für die Interpolationsfilterung entweder einmalig festgelegt oder vor dem Beginn einer Bildübertragung zu einem Empfänger übertragen werden.

6. Verfahren nach Anspruch 2 oder 5, **dadurch gekennzeichnet, daß** nach der Spiegelung der innerhalb des Referenzblockes gelegenen Bildpunkte für die Interpolationsfilterung eine symmetrische Filterstruktur verwendet wird.

7. Verfahren nach einem der Ansprüche 1 bis 6, **dadurch gekennzeichnet, daß** für die Ermittlung eines Bewegungsvektors ein mehrstufiges Interpolationsverfahren angewendet wird, wobei in einem ersten Suchschritt ein Bewegungsvektor mit Pelgenauigkeit bestimmt wird, in einem zweiten Suchschritt durch Interpolationsfilterung ein verbesserter Bewegungsvektor auf Halbpelgenauigkeit bestimmt wird und in einem dritten Suchschritt die Interpolationsfilterung gemäß des letzten Schrittes des Anspruchs 1 oder des Anspruchs 2 insbesondere auf Viertelpelgenauigkeit durchgeführt wird.

**Claims**

1. Method for motion-compensating prediction of moving picture sequences using motion vectors which, for each picture block of a current picture, specify the position of the picture block used for prediction in relation to an already transmitted reference picture, having the following steps:

- an aliasing-reducing interpolation filtering with sub-pel accuracy is used for determining the motion vectors, more adjacent pixels being used for the interpolation than in the case of a bilinear interpolation,
- the interpolation filtering is carried out in a manner dependent on the spatial position of an intermediate pixel value to be interpolated, in such a way that, for the prediction of a picture block of MxM pixels, for filtering, at most a reference picture block comprising (M+1)x(M+1) pixels must be accessed.

2. Method for motion-compensating prediction of moving picture sequences using motion vectors which, for each picture block of a current picture, specify the position of the picture block used for prediction in relation to an already transmitted reference picture, having the following steps:

- an aliasing-reducing interpolation filtering with sub-pel accuracy is used for determining the motion vectors, more adjacent pixels being used for the interpolation than in the case of a bilinear interpolation,
- the pixels which are required during the prediction of a picture block of MxM pixels for interpolation filtering and are located outside a picture block of the reference picture that has a size of (M+1)x(M+1) are generated by mirroring the pixels located within the reference block at a block edge.

3. Method according to Claim 1, **characterized in that** a location-adaptive asymmetrical FIR filter structure is used for the interpolation filtering, which structure, for the interpolation filtering of intermediate pixels in the region of block edges, in each case takes account of all pixels proceeding from a current intermediate pixel position up to the block edge and takes account of the pixels located on the other side of the intermediate pixel positions only to an extent until altogether a predetermined number of pixels has been reached for the interpolation.

4. Method according to Claim 1 or 3, **characterized in that** a total of N/2 different location-adaptive filters are used for the interpolation filtering given a filter length of N filter elements.

5. Method according to one of Claims 1, 3 or 4, **characterized in that** the filter coefficients for the interpolation filtering are either uniquely defined or transmitted to a receiver before the beginning of a picture transmission.

6. Method according to Claim 2 or 5, **characterized in that**, after the mirroring of the pixels located within the reference block, a symmetrical filter structure is used for the interpolation filtering.

7. Method according to one of Claims 1 to 6, **characterized in that** a multi-stage interpolation method is used for determining a motion vector, in which case, in a first search step, a motion vector is determined with pel accuracy and, in a second search step, an improved motion vector is determined at half-pel accuracy by interpolation filtering and, in a third search step, the interpolation filtering is carried out in accordance with the last step of Claim 1 or Claim 2, in particular at quarter-pel accuracy.

**Revendications**

1. Procédé de prédiction de suites d'images animées avec compensation de mouvement en utilisant des vecteurs de mouvement indiquant pour chaque bloc-image appartenant à une image actuelle, la position du bloc-image utilisé pour la prédiction, par rapport à une image de référence déjà transmise, **caractérisé par** les étapes suivantes :

- pour déterminer les vecteurs de mouvement on utilise un filtrage par interpolation à réduction de crénelage avec la précision inférieure à un pel, et pour l'interpolation on utilise plus de points image voisins que dans une interpolation bilinéaire,
- on effectue le filtrage par interpolation en fonction de la position locale d'une valeur de points image intermédiaire à interpoler, de sorte que pour la prédiction d'un bloc-image composé de (MxM) points image, le filtrage exige au maximum un bloc de l'image de référence comprenant (M+1)x(M+1) points image.

2. Procédé de prédiction de suites d'images animées avec compensation de mouvement en utilisant des vecteurs de mouvement qui donnent pour chaque bloc-image appartenant à une image actuelle, la position du bloc-image utilisé pour la prédiction, par rapport à une image de référence déjà transmise,

**caractérisé par** les étapes suivantes :

- pour déterminer les vecteurs de mouvement on utilise un filtrage par interpolation à réduction de crénelage avec une précision inférieure à celle de pel, et pour l'interpolation on utilise plus de points d'images voisins que dans une interpolation bilinéaire,
- les points images nécessaires pour la prédiction d'un bloc-image composé de MxM points image pour le filtrage par interpolation, et qui se situent à l'extérieur d'un bloc de l'image de référence ayant une taille de (M+1)x(M+1), sont générés en formant l'image symétrique en miroir par rapport à un bord du bloc, des points image situés dans le bloc de référence.

3. Procédé selon la revendication 1,
   **caractérisé en ce que**
   pour le filtrage par interpolation on utilise une structure de filtre FIR asymétrique, à adaptation locale, qui, pour le filtrage par interpolation de points image intermédiaires au niveau des arêtes du bloc, tient compte chaque fois de tous les points image en partant d'une position actuelle des points image intermédiaires jusqu'au bord du bloc, et ne prend en compte les points image situés de chaque côté des positions des points image intermédiaires que jusqu'à ce que globalement on ait atteint un nombre prédéterminé de points image pour l'interpolation.

4. Procédé selon l'une quelconque des revendications 1 ou 3,
   **caractérisé en ce que**
   pour le filtrage par interpolation avec une longueur de filtre de N éléments de filtre, on utilise globalement N/2 filtres différents avec adaptation locale.

5. Procédé selon l'une quelconque des revendications 1, 3 ou 4,
   **caractérisé en ce que**
   les coefficients de filtres pour le filtrage par interpolation soit sont fixés une seule fois, soit sont transmis avant le début d'une transmission d'image vers un récepteur.

6. Procédé selon l'une quelconque des revendications 2 ou 5,
   **caractérisé en ce qu'**
   après avoir formé les symétriques en miroir des points image situés dans le bloc de référence, le filtrage par interpolation utilise une structure de filtre symétrique.

7. Procédé selon l'une quelconque des revendications 1 à 6,
   **caractérisé en ce que**
   pour déterminer un vecteur de mouvement on applique un procédé d'interpolation à plusieurs niveaux, selon lequel dans une première étape de recherche on définit un vecteur de mouvement à la précision du pel, dans une seconde étape de recherche, par un filtrage par interpolation on définit un vecteur de mouvement amélioré à la précision du demi-pel, et dans une troisième étape de recherche on effectue le filtrage par interpolation selon la dernière étape de la revendication 1 ou de la revendication 2, notamment avec une précision du 1/4-pel.

A
a $\oplus$  b $\bigcirc$  B +

c $\bigcirc$  d $\bigcirc$

C +  D +

# Fig. 1

# Fig. 2

$D_{-4}$ +  $D_{-3}$ +  $D_{-2}$ +  $D_{-1}$ +  $D_{+1}$ +  $D_{+2}$ +  $D_{+3}$ +  $D_{+4}$ +

$C_{-4}$ +  $C_{-3}$ +  $C_{-2}$ +  $C_{-1}$ +  $C_{+1}$ +  $C_{+2}$ +  $C_{+3}$ +  $C_{+4}$ +

$B_{-4}$ +  $B_{-3}$ +  $B_{-2}$ +  $B_{-1}$ +  $B_{+1}$ +  $B_{+2}$ +  $B_{+3}$ +  $B_{+4}$ +

$A_{-4}$  $A_{-3}$  $A_{-2}$  $A_{-1}$ $b_0$ $A_{+1}$  $A_{+2}$  $A_{+3}$  $A_{+4}$
$c_{-4}{}_0^+$  $c_{-3}{}_0^+$  $c_{-2}{}_0^+$  $c_{-1}{}_0^+$ $d_0$ $c_{+1}{}_0^+$  $c_{+2}{}_0^+$  $c_{+3}{}_0^+$  $c_{+4}{}_0^+$
$E_{-4}$ +  $E_{-3}$ +  $E_{-2}$ +  $E_{-1}$ +  $E_{+1}$ +  $E_{+2}$ +  $E_{+3}$ +  $E_{+4}$ +

$F_{-4}$ +  $F_{-3}$ +  $F_{-2}$ +  $F_{-1}$ +  $F_{+1}$ +  $F_{+2}$ +  $F_{+3}$ +  $F_{+4}$ +

$G_{-4}$ +  $G_{-3}$ +  $G_{-2}$ +  $G_{-1}$ +  $G_{+1}$ +  $G_{+2}$ +  $G_{+3}$ +  $G_{+4}$ +

$H_{-4}$ +  $H_{-3}$ +  $H_{-2}$ +  $H_{-1}$ +  $H_{+1}$ +  $H_{+2}$ +  $H_{+3}$ +  $H_{+4}$ +

Fig. 3

Fig. 4

Fig. 5

Fig. 6